# EUROPEAN PATENT SPECIFICATION

(11) **EP 2 105 452 B1**
(45) Date of publication and mention of the grant of the patent: **20.03.2013**
(21) Application number: 08703134.0
(22) Date of filing: 11.01.2008
(51) Int. Cl.: C08F 299/06, C08F 290/06, C08G 18/67, C08G 18/32, C08G 18/48, C09D 175/16

(54) **AQUEOUS URETHANE RESIN COMPOSITION**
WÄSSRIGE URETHAN-HARZ-ZUSAMMENSETZUNG
COMPOSITION AQUEUSE DE RÉSINE D'URÉTHANE

(30) Priority: 18.01.2007 JP 2007009372
(43) Date of publication of application: 30.09.2009
(73) Proprietor: Mitsui Chemicals, Inc., Tokyo 105-7117 (JP)
(72) Inventor: MEGA, Izumi, Sodegaura-shi Chiba 299-0265 (JP); TACHIBANA, Atsuko, Sodegaura-shi Chiba 299-0265 (JP); UCHIDA, Takashi, Sodegaura-shi Chiba 299-0265 (JP)
(74) Representative: HOFFMANN EITLE
(86) International application number: PCT/JP2008/050270
(87) International publication number: WO 2008/087904

(56) References cited:
- EP-A1- 0 404 371
- JP-A- 06 287 260
- JP-A- 2001 098 041
- JP-A- 2003 040 955
- JP-A- 2005 510 600
- JP-A- 2007 023 177
- JP-A- 2007 023 178
- US-A- 3 935 146
- US-A- 4 210 713

## Description

### TECHNICAL FIELD

The present invention relates to aqueous urethane resin compositions, and more specifically, to an aqueous urethane resin composition containing an aqueous urethane resin cured with active energy rays.

### BACKGROUND ART

Active energy ray-curable resins to be cured by irradiation with active energy rays have excellent curability and good productivity, and can be produced at low cost. Hence, they are widely used in various fields such as coating materials for various kinds of plastics, paints for woodwork, inks for printing, and adhesives.
On the other hand, in recent years, it has been desired to impart water solubility to such active energy ray-curable resins from the viewpoint of reducing environmental load.

For example, an active energy ray curable type water-containing resin composition containing a vehicle and water as essential components, in which the vehicle is a reaction product made of (A) an acrylic acid ester containing at least one hydroxyl group in its molecule, (B) an organic polyisocyanate, and (C) a polyethylene glycol containing at least one hydroxyl group, has been proposed (see, for example, the following Patent Document 1).
Patent Document 1: Japanese Unexamined Patent Publication No. 6-287260
EP 0 404 371 describes am aqueous dispersion of water-dispersible polyurethane which is useful as coating composition.
US 3,935,146 describes dispersions adapted to be dispersed in water without added emulsifiers which contain a polyurethaneamide containing ethylene oxide units.
US 4,210,713 describes a photo-curable coating composition having a high hiding power comprising a specific urethane-modified polymer, and α,β-ethylenically unsaturated compound, a photo-sensitizer and a coloring agent.
JP 2005 510 600 describes a polyurethane polymer comprising from 35-90 wt.-% of a poly(C24-alkylene oxide), wherein not less than 60 wt.-% is poly(ethylene oxide) and wherein at least 5 wt.-% is incorporated in lateral chains.
JP 6287260 describes a composition consisting of a vehicle which is a reaction product obtained from (A) an acrylic acid ester having a hydroxyl group, (B) an organic polyisocyanate and (C) polyethylene glycols having hydroxyl group and water.
JP 2003 040 955 describes an aqueous active energy-ray curable resin composition composed of a polyurethane acrylate and water, this composition is specified by having the polyurethane acrylate which is a neutralized salt of a reaction product obtained by neutralizing the reaction product of (A) a hydroxy-containing acrylate, (B) an organopolyisocyanate, (C) a polyethylene glycol having at least one hydroxy in a molecule and (D) a fatty acid having at least one hydroxy in a molecule, with (E) a tertiary amine.
JP 2007 023 177 and JP 2007 023 178 describe an active energy ray-curing type aqueous urethane resin dispersion which is obtained by reacting a polyalkylene ether chain-containing diol compound (A) with a polyol (B), a polyisocyanate (C) and a compound (D) having an α,β-unsaturated double bond and a hydroxy group in combination.

### DISCLOSURE OF THE INVENTION

### PROBLEMS TO BE SOLVED

However, the active energy ray curable type water-containing resin composition described in the above Patent Document 1 has difficulty of satisfying both emulsification or dispersion stability of the vehicle in water and adhesion of the vehicle to an adherend after curing, so that further consideration is required in actual use.
It is an object of the present invention to provide an aqueous urethane resin composition containing an aqueous urethane resin curable by irradiation with an active energy ray, capable of ensuring satisfactory emulsification or dispersion stability, and excellent in physical properties after curing.

### MEANS FOR SOLVING THE PROBLEM

The aqueous polyurethane resin composition of the present invention contains an aqueous urethane resin obtained by reacting only a polyisocyanate, a polyoxyethylene side chain-containing diol containing 20 to 95% by weight of a polyoxyethylene group relative to the polyoxyethylene side chain-containing diol in a mid portion of a side chain branched from a main chain having a hydroxyl group at both ends, and a (meth)acrylic acid ester containing at least one hydroxyl group, and cured by irradiation with an active energy ray; and water.

In the aqueous polyurethane resin composition of the present invention, it is preferable that the polyoxyethylene side chain-containing diol is a dialkanolamine derivative represented by the following general formula (1):

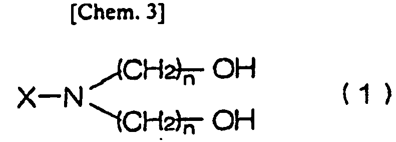

(wherein n may be the same or different from each other and each represents an integer of 1 to 3; and X represents a monovalent organic group containing 26 to 97% by weight of an oxyethylene group.)
Further, it is preferable that, in the general formula (1), X is a monovalent organic group represented by the following general formula (2):

[Chem. 4]

Z-CO-NH-Y-NH-CO- (2)

(wherein Z represents a lower alkyloxy-polyoxyethylene group having an average molecular weight of 120 to 5000; and Y represents a divalent hydrocarbon group of 6 to 15 carbon atoms.)
In the aqueous polyurethane resin composition of the present invention, it is preferable that the aqueous urethane resin is obtained by reacting only 10 to 80 parts by weight of the polyisocyanate, 5 to 80 parts by weight of the polyoxyethylene side chain-containing diol, and 10 to 80 parts by weight of the (meth)acrylic acid ester.

In the aqueous polyurethane resin composition of the present invention, it is preferable that the polyisocyanate contains 1,3- or 1,4-bis(isocyanatomethyl)cyclohexane or a mixture thereof.
In the aqueous polyurethane resin composition of the present invention, it is preferable that the aqueous urethane resin composition is prepared by preparing an isocyanate group-terminated prepolymer by reacting only the polyisocyanate and the polyoxyethylene side chain-containing diol to react, and subsequently reacting the isocyanate group-terminated prepolymer with the (meth)acrylic acid ester.

### EFFECT OF THE INVENTION

According to the aqueous polyurethane resin composition of the present invention, the aqueous urethane resin curable by irradiation with an active energy ray can ensure satisfactory emulsification or dispersion stability in water. This can thus provide good storage stability for a long period of time. Along with this, good adhesion to an adherend after curing can be acquired, which can provide good coating properties. Furthermore, good water resistance can be obtained after curing.

### EMBODIMENT OF THE INVENTION

The aqueous urethane resin composition of the present invention contains an aqueous urethane resin curable by irradiation with an active energy ray (hereinafter referred to as aqueous urethane resin) and water.
In the present invention, the aqueous urethane resin can be obtained by reacting only a polyisocyanate, a polyoxyethylene side chain-containing diol, and a (meth)acrylic acid ester containing at least one hydroxyl group.

In the present invention, the polyisocyanate is an isocyanate group-containing compound having two or more isocyanate groups, and examples thereof include cycloaliphatic polyisocyanate, aliphatic polyisocyanate, aralkyl polyisocyanate, and aromatic polyisocyanate.
Examples of the cycloaliphatic polyisocyanate include cycloaliphatic diisocyanates such as 3-isocyanatomethyl-3,5,5-trimethylcyclohexyl isocyanate (isophorone diisocyanate, IPDI), 4,4'-, 2,4'- or 2,2'-dicyclohexylmethane diisocyanate or a mixture thereof (H₁₂MDI), 1,3- or 1,4-bis(isocyanatomethyl)cyclohexane or a mixture thereof (hydrogenated xylylene diisocyanate, H₆XDI), 2,5- or 2,6-bis(isocyanatomethyl)norbornane or a mixture thereof (NBDI), 1,3-cyclopentane diisocyanate, 1,4-cyclohexane diisocyanate, 1,3-cyclohexane diisocyanate, methyl-2,4-cyclohexane diisocyanate, and methyl-2,6-cyclohexane diisocyanate.

Examples of the aliphatic polyisocyanate include aliphatic diisocyanates such as hexamethylene diisocyanate (HDI), trimethylene diisocyanate, tetramethylene diisocyanate, pentamethylene diisocyanate, 1,2-, 2,3- or 1,3-butylene diisocyanate, and 2,4,4- or 2,2,4-trimethyl hexamethylene diisocyanate.

Examples of the aralkyl polyisocyanate include aralkyl diisocyanates such as 1,3- or 1,4-xylylene diisocyanate or a mixture thereof (XDI), 1,3- or 1,4-tetramethyl xylylene diisocyanate or a mixture thereof (TMXDI) and ω,ω'-diisocyanato-1,4-diethylbenzene.
Examples of the aromatic polyisocyanate include aromatic diisocyanates such as 4,4'-, 2,4'- or 2,2'-diphenylmethane diisocyanate or a mixture thereof (MDI), 2,4- or 2,6-tolylene diisocyanate or a mixture thereof (TDI), 3,3'-dimethoxybiphenyl-4,4'-diisocyanate, 1,5-naphthalene diisocyanate (NDI), m-, or p-phenylene diisocyanate or a mixture thereof, 4,4'-diphenyl diisocyanate and 4,4'-diphenyletherdiisocyanate.

Examples of the polyisocyanate include multimers (e.g., dimers, trimers, etc.) of the above-mentioned polyisocyanates; and biuret-, allophanate-, oxadiazinetrione-, and polyol-modified polyisocyanates produced by reaction of the above-mentioned polyisocyanates or multimers thereof with water, alcohol or the following low-molecular-weight polyol, carbon dioxide, and the following low-molecular-weight polyol, respectively.

The low-molecular-weight polyol is, for example, a hydroxyl group-containing compound having two or more hydroxyl groups and having a molecular weight of 60 to 400, and examples thereof include aliphatic diols, including C2-22 alkane diols such as ethylene glycol, propylene glycol, trimethylene glycol, 1,4-butylene glycol, 1,3-butylene glycol, 1,2-butylene glycol, 1,5-pentanediol, 3-methyl-1,5-pentanediol, 2,2-dimethyl-1,3-propanediol, neopentyl glycol, 1,6-hexanediol, 2,2-diethyl-1,3-propanediol, 3,3-dimethylolheptane, 2-ethyl-2-butyl-1,3-propanediol, 1,12-dodecanediol, and 1,18-octadecanediol, and alkene diols such as 2-butene-1,4-diol and 2,6-dimethyl-1-octene-3,8-diol; alicyclic diols such as 1,4-cyclohexanediol, 1,4-cyclohexane dimethanol, and hydrogenated bisphenol A or C2-4 alkylene oxide adducts thereof; aromatic diols such as resorcinol, xylylene glycol, bis(hydroxyethoxy)benzene, bis(hydroxyethylene)terephthalate, bisphenol A, bisphenol S, bisphenol F, and C2-4 alkylene oxide adducts of these bisphenols; low-molecular-weight diols including etherdiols such as diethylene glycol, triethylene glycol, and dipropylene glycol; low-molecular-weight triols such as glycerin, 2-methyl-2-hydroxymethyl-1,3-propanediol, 2,4-dihydroxy-3-hydroxymethylpentane, 1,2,6-hexanetriol, trimethylolethane, trimethylolpropane, 2-methyl-2-hydroxymethyl-1,3-propanediol, 2,4-dihydroxy-3-(hydroxymethyl) pentane, 2,2-bis(hydroxymethyl)-3-butanol, and other aliphatic triols (of 8 to 24 carbon atoms); and low-molecular-weight polyols having four or more hydroxyl groups such as tetramethylolmethane, pentaerythritol, dipentaerythritol, D-sorbitol, xylitol, D-mannitol, and D-mannite.

The above-mentioned polyisocyanates may be used alone or in combination of two or more kinds. Among them, alicyclic polyisocyanate, aliphatic polyisocyanate, and/or derivatives thereof are preferable from the viewpoint of excellent yellowing resistance. From the viewpoint of excellent abrasion resistance in addition to the yellowing resistance, 1,3- or 1,4-bis(isocyanatomethyl)cyclohexane or a mixture thereof, and/or a derivative thereof is/are more preferable.

In the present invention, the polyoxyethylene side chain-containing diol has a main chain and a side chain branched from the main chain. The main chain has a hydroxyl group at both ends and the side chain has a polyoxyethylene group in its mid portion in a proportion of 20 to 95% by weight, or preferably 30 to 93% by weight, relative to the polyoxyethylene side chain-containing diol.
When the polyoxyethylene group content is less than 20% by weight, hydrophilic portions are short, which may result in deterioration of emulsification or dispersion stability. On the other hand, when the polyoxyethylene group content is more than 95% by weight, viscosity becomes excessively high, which may result in deterioration of emulsification or dispersion stability.

These polyoxyethylene side chain-containing diols are not particularly limited, and examples thereof include dialkanolamine derivatives, triisocyanate derivatives, and tricarboxylic acid derivatives.
The dialkanolamine derivative is represented, for example, by the following general formula (1):

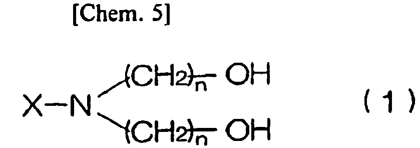

(wherein n may be the same or different from each other and each represents an integer of 1 to 3; and X represents a monovalent organic group containing 26 to 97% by weight of an oxyethylene group.)
In the above general formula (1), when n is 1, 2, and 3, (CH₂)n represents a methylene group, an ethylene group, and a propylene group, respectively. Two (CH₂)n bonded to a nitrogen atom include embodiments both having the same number of carbon atoms and embodiments having a different number of carbon atoms from each other. Among them, the embodiments both having the same number of carbon atoms are preferable, and both of them are more preferably an ethylene group.

In the above general formula (1), X is a monovalent organic group, containing 26 to 97% by weight, or preferably 30 to 93% by weight of the oxyethylene group (CH₂CH₂O) per the monovalent organic group. Specifically, X is represented, for example, by the following general formula (2):

[Chem. 6]

Z-CO-NH-Y-NH-CO- (2)

(wherein Z represents a lower alkyloxy-polyoxyethylene group having an average molecular weight of 120 to 5000; and Y represents a divalent hydrocarbon group of 6 to 15 carbon atoms.)
In the above general formula (2), the lower alkyloxy-polyoxyethylene group represented by Z is a polyoxyethylene group having one end capped with a lower alkyloxy group, and the average molecular weight thereof is 120 to 5000, or preferably 160 to 4000. The lower alkyloxy-polyoxyethylene group represented by Z is represented, for example, by the following general formula (3):

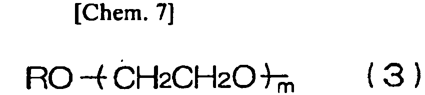

(wherein R represents an alkyl group of 1 to 4 carbon atoms; and m represents an integer of 2 to 112.)
In the above general formula (3), examples of the alkyl group of 1 to 4 carbon atoms represented by R include methyl, ethyl, n-propyl, iso-propyl, n-butyl, iso-butyl, sec-butyl, and tert-butyl. Among them, methyl and ethyl are preferable. In the above general formula (3), m represents a polymerization degree of polyoxyethylene, ranging from 2 to 112, preferably 3 to 90, or more preferably 8 to 67.

Examples of the divalent hydrocarbon group of 6 to 15 carbon atoms represented by Y include divalent aliphatic hydrocarbon groups, divalent alicyclic hydrocarbon groups, divalent aralkyl hydrocarbon groups, and divalent aromatic hydrocarbon groups, all having 6 to 15 carbon atoms. Among them, a divalent aliphatic hydrocarbon group, a divalent alicyclic hydrocarbon group, and a divalent aralkyl hydrocarbon group, all having 6 to 13 carbon atoms, are preferable. The divalent hydrocarbon group of 6 to 15 carbon atoms represented by Y specifically corresponds to a diisocyanate residue when synthesized by a method to be described later.

The dialkanolamine derivative can be synthesized, for example, in the following manner. Specifically, first, urethanation reaction is conducted by mixing diisocyanate and a one-end-capped polyoxyethylene glycol at such a ratio that the equivalent ratio (NCO/OH) of the isocyanate group (NCO) of the diisocyanate to the hydroxyl group (OH) of the one-end-capped polyoxyethylene glycol is in the range of, for example, 2 to 50, or preferably 5 to 20, that is, the amount of NCO exceeds that of OH, and thereafter, if necessary, unreacted diisocyanate is removed from the mixture by distillation to thereby obtain a polyoxyethylene group-containing monoisocyanate.

Subsequently, ureation reaction is conducted by mixing the polyoxyethylene group-containing monoisocyanate thus obtained and dialkanolamine at such a ratio that the equivalent ratio (NCO/NH) of the isocyanate group (NCO) of the polyoxyethylene group-containing monoisocyanate to the secondary amino group (NH) of the dialkanolamine is in the range of, for example, 0.9 to 1.1, or preferably 0.95 to 1.05, that is, the amount of NCO is nearly equal to that of NH.

In the synthesis of the dialkanolamine derivative, examples of the diisocyanate include the above-mentioned diisocyanate, or preferably an alicyclic diisocyanate and an aliphatic diisocyanate. More preferable is 1,3- or 1,4-bis(isocyanatomethyl)cyclohexane or a mixture thereof, or hexamethylene diisocyanate (HDI).

Examples of the one-end-capped polyoxyethlene glycol include polyoxyethylene glycol monoalkyl ether, or preferably methoxypolyethylene glycol and ethoxypolyethylene glycol, and the number average molecular weight thereof is 120 to 5000, or preferably 160 to 4000.
The dialkanolamine is, for example, dialkanolamine of 1 to 3 carbon atoms, and specific examples thereof include symmetrical dialkanolamines such as dimethanolamine, diethanolamine, and dipropanolamine; and asymmetrical dialkanolamines such as methanol ethanolamine and ethanol propanolamine. Among them, a symmetrical dialkanolamine is preferable, or diethanolamine is more preferable.

Examples of the triisocyanate derivative include those obtained by reacting one isocyanate group in the triisocyanate with the above-mentioned one-end-capped polyoxyethlene glycol and reacting the remaining two isocyanate groups therein with the above-mentioned low-molecular-weight polyol.
The triisocyanate is an isocyanate group-containing compound having three isocyanate groups, and examples thereof include trimers of the above-mentioned polyisocyanates, and polyol-modified polyisocyanates produced by reaction of diisocyanate and trimethylolpropane.

The triisocyanate derivative can be synthesized, for example, in the following manner. Specifically, first, urethanation reaction is conducted by mixing 3 mol or more of the triisocyanate per 1 mol of the one-end-capped polyoxyethlene glycol, and thereafter, if necessary, unreacted triisocyanate is removed from the mixture by distillation, to thereby obtain a polyoxyethylene group-containing diisocyanate. Subsequently, ureation reaction is conducted by mixing 2 mol or more of the low-molecular-weight polyol per 1 mol of the polyoxyethylene group-containing diisocyanate thus obtained.

Examples of the tricarboxylic acid derivative include those obtained by reaction of the above-mentioned one-end-capped polyoxyethlene glycol with one carboxyl group in the tricarboxylic acid having three carboxyl groups such as trimellitic acid, and reaction of the above-mentioned low-molecular-weight polyol with the remaining two carboxyl groups.
The tricarboxylic acid derivative can be synthesized, for example, in the following manner. Specifically, first, esterification reaction is conducted by mixing 3 mol or more of the tricarboxylic acid per 1 mol of the one-end-capped polyoxyethlene glycol, and thereafter, if necessary, unreacted tricarboxylic acid is removed from the mixture by distillation, to thereby obtain a polyoxyethylene group-containing dicarboxylic acid. Subsequently, esterification reaction is conducted by mixing 2 mol or more of the low-molecular-weight polyol per 1 mol of the polyoxyethylene group-containing dicarboxylic acid thus obtained.

In the present invention, the (meth)acrylic acid ester containing at least one hydroxyl group is a (meth)acrylic acid ester having one or more hydroxyl groups (hereinafter referred to as (meth)acrylic acid ester), and examples thereof include 2-hydroxyethyl (meth)acrylate, 2-hydroxypropyl (meth)acrylate, polyethylene glycol mono(meth)acrylate, polypropylene glycol mono(meth)acrylate, 4-hydroxybutyl (meth)acrylate, 2-phenoxypropyl (meth)acrylate, pentaerythritol tri(meth)acrylate, pentaerythritol di(meth)acrylate, dipentaerythritol tri(meth)acrylate, dipentaerythritol tetra(meth)acrylate, dipentaerythritol penta(meth)acrylate, glycerol mono(meth)acrylate, glycerol di(meth)acrylate, trimethylolpropane mono(meth)acrylate, and trimethylolpropane di(meth)acrylate.

These (meth)acrylic acid esters can be used alone or in combination of two or more kinds. The (meth)acrylic acid ester ((meth)acrylate) is defined as acrylic acid ester (acrylate) and/or methacrylic acid ester (methacrylate).
In the production of the aqueous urethane resin, for example, polyols such as the above-mentioned low-molecular-weight polyols and macropolyols can also be made to react with each of the components mentioned above.

Examples of the macropolyols include polyether polyol, polyester polyol, polycarbonate polyol, acrylic polyol, epoxy polyol, natural oil polyol, silicone polyol, fluorine polyol and polyolefin polyol.
Examples of the polyether polyols include polyalkylene oxides such as polyethylene glycol, polypropylene glycol and polyethylene polypropylene glycol (random or block copolymer) which are obtained by addition reaction of alkylene oxide such as ethyleneoxide and/or propylene oxide, for example, using the above-mentioned low-molecular-weight polyol as an initiator. Examples thereof also include polytetramethylene ether glycol obtained by ring-opening polymerization of tetrahydrofuran.

Examples of the polyester polyols include those obtained by reaction of one kind or two or more kinds of the above-mentioned low-molecular-weight polyols with carboxylic acid such as oxalic acid, malonic acid, succinic acid, methyl succinic acid, glutaric acid, adipic acid, 1,1-dimethyl-1,3-dicarboxypropane, 3-methyl-3-ethyl glutaric acid, azelaic acid, sebacic acid, other aliphatic dicarboxylic acids (of 11 to 13 carbon atoms), hydrogenated dimer acid, maleic acid, fumaric acid, itaconic acid, orthophthalic acid, isophthalic acid, terephthalic acid, toluene dicarboxylic acid, dimer acid and HET acid, and acid anhydride derived from these carboxylic acids, such as oxalic anhydride, succinic anhydride, maleic anhydride, phthalic anhydride, 2-alkyl succinic anhydride (of 12 to 18 carbon atoms), tetrahydrophtalic anhydride and trimellitic anhydride, and also acid halide derived from these carboxylic acids such as oxalic dichloride, adipic dichloride and sebacic dichloride. Further, examples thereof include lactone polyester polyols such as polycaprolactone polyol and polyvalerolactone polyol, which are obtained by ring-opening polymerization of lactones such as ε-caprolactone and γ-valerolactone, for example using the above-mentioned low-molecular-weight polyol as an initiator.

Examples of the polycarbonate polyols include those obtained by ring-opening polymerization of carbonates such as ethylene carbonate and dimethyl carbonate, using the above-mentioned low-molecular-weight polyol as an initiator.
Examples of the acrylic polyols include copolymers obtained by copolymerizing a polymerizable monomer having one or more hydroxyl groups with another monomer copolymerizable with the polymerizable monomer. Examples of the polymerizable monomer having a hydroxyl group include 2-hydroxyethyl (meth)acrylate, hydroxypropyl (meth)acrylate, hydroxybutyl (meth)acrylate, 2,2-dihydroxymethylbutyl(meth)acrylate, polyhydroxyalkyl maleate, and polyhydroxyalkyl fumarate. Moreover, examples of such another monomer copolymerizable with these polymerizable monomers include (meth)acrylic acid, alkyl (meth)acrylate (of 1 to 12 carbon atoms), maleic acid, alkyl maleate, fumaric acid, alkyl fumarate, itaconic acid, alkyl itaconate, styrene, α-methyl styrene, vinyl acetate, (meth)acrylonitrile, 3-(2-isocyanato-2-propyl)-α-methylstyrene, trimethylolpropane tri(meth)acrylate, and pentaerythritol tetra(meth)acrylate. The acrylic polyol can be obtained by copolymerizing these monomers in the presence of a suitable solvent and a suitable polymerization initiator.

Examples of the epoxy polyols include epoxy polyols obtained by reaction of the above-mentioned low-molecular-weight polyol with a polyfunctional halohydrin such as epichlorohydrin and β-methyl epichlorohydrin.
Examples of the natural oil polyols include hydroxyl group-containing natural oil such as castor oil and cocoanut oil.

Examples of the silicone polyol include copolymers in which vinyl group-containing silicone compounds such as γ-methacryloxypropyl trimethoxysilane are used as another copolymerizable monomer in the copolymerization of the above acrylic polyols; and terminal alcohol-modified polydimethylsiloxane.
Examples of the fluorine polyols include copolymers in which vinyl group-containing fluorine compounds such as tetrafluoroethylene and chlorotrifluoroethylene are used as another copolymerizable monomer in the copolymerization of the above acrylic polyols.

Examples of the polyolefin polyols include polybutadiene polyol and partially saponified ethylene-vinylacetate copolymer.
These macropolyols have a number average molecular weight of, for example, 300 to 10000, or preferably 500 to 5000, and have a hydroxyl equivalent of 100 to 5000, or preferably 160 to 2500.

These polyols may be used alone or in combination of two or more kinds. Among them, low-molecular-weight polyol is preferable, or aliphatic diol is more preferable.
The aqueous urethane resin can be obtained by using a polyisocyanate, a polyoxyethylene side chain-containing diol, and a (meth)acrylic acid ester as essential components and using a polyol as optional components to allow these components to react.

The essential components to be mixed include, for example, per 100 parts by weight of the total amount of the components mixed, 10 to 80 parts by weight, or preferably 10 to 60 parts by weight of the polyisocyanate, 5 to 80 parts by weight, or preferably 5 to 60 parts by weight of the polyoxyethylene side chain-containing diol, and 10 to 80 parts by weight, or preferably 30 to 80 parts by weight of the (meth)acrylic acid ester.
The mixing proportions of the polyisocyanate and the (meth)acrylic acid ester are determined in consideration of the crosslink density of the aqueous urethane resin thus obtained or the like. Moreover, the mixing proportion of the polyoxyethylene side chain-containing diol is determined in consideration of emulsification or dispersion stability, hardness after curing, or water resistance of the aqueous urethane resin composition prepared from the obtained aqueous urethane resin.

When the mixing proportion of the polyoxyethylene side chain-containing diol is less than 5 parts by weight, the aqueous urethane resin composition becomes unstable, which may cause phase separation. On the other hand, when the mixing proportion thereof is more than 80 parts by weight, the crosslink density decreases, which may result in insufficient curing, or even if sufficiently cured, the water resistance after curing may deteriorate.
The optional component to be mixed include, for example, per 100 parts by weight of the total amount of the components mixed, 30 parts by weight or less, or preferably 25 parts by weight or less of the polyol.

The method for producing the aqueous urethane resin is not particularly limited, and the aqueous urethane resin may be produced by mixing the essential components and the optional components in the above proportions and allowing them to react. For example, the respective components may be charged at once or in plural steps to allow them to react.
Preferably, first, reaction is conducted by mixing a polyisocyanate, a polyoxyethylene side chain-containing diol, and if necessary, a polyol, at such a ratio that the amount of the isocyanate group (NCO) of the polyisocyanate exceeds the amount of the hydroxyl groups (OH) of the polyoxyethylene side chain-containing diol and the polyol used together as required, specifically, the equivalent ratio (NCO/OH) thereof is in the range of, for example, 1.1 to 20, or preferably 1.2 to 10, to thereby obtain an isocyanate group-terminated prepolymer. Subsequently, reaction is conducted by mixing the isocyanate group-terminated prepolymer with (meth)acrylic acid ester at such a ratio that the amount of the hydroxyl group (OH) of the (meth)acrylic acid ester is equal to or exceeds the amount of the isocyanate groups (NCO) of the isocyanate group-terminated prepolymer and unreacted polyisocyanate, that is, the equivalent ratio (NCO/OH) thereof is substantially 1.0 or less. In this reaction, the remaining of the isocyanate group may deteriorate water resistance or transparency.

As a result of the reaction, the aqueous urethane resin can be obtained as a mixture of a main product made of the polyisocyanate, the polyoxyethylene side chain-containing diol, and if necessary, the polyol, and the (meth)acrylic acid ester, and a by-product made of a polyisocyanate and a (meth)acrylic acid ester. In the above reaction, the mixing proportions of the respective components are adjusted so that the molar ratio of the main product to the by-product is, for example, 1:0.1 to 20, or preferably, 1:0.1 to 10.

The reaction temperature is usually 40 to 100°C, or preferably 60 to 80°C. The total reaction time is, for example, 4 to 16 hours. The reaction is preferably conducted under a dry nitrogen atmosphere or a dry air atmosphere.
Further, after the synthesis of the isocyanate group-terminated prepolymer, but before the mixing of the (meth)acrylic acid ester, if necessary, unreacted polyisocyanate can be removed by a known removal means such as distillation or extraction. In this case, the production of the above-mentioned by-product can be suppressed.

In the reaction, if necessary, a known urethanizing catalyst such as amine catalyst, tin catalyst, and lead catalyst can be added. Moreover, if necessary, a solvent inert in the above reaction can be mixed.
Further, in the reaction, in order to prevent polymerization of the (meth)acrylic acid ester, 10 to 10000 ppm, or preferably 50 to 5000 ppm of a polymerization inhibitor such as hydroquinone, methoxy phenol, and phenothiazin can be mixed in a reaction system.

The end point of the above reaction can be easily confirmed by an infrared spectrophotometer (IR) from the disappearance of the isocyanato group.
The aqueous urethane resin thus obtained has, for example, a (meth)acryloyl group at the end of the main chain, and can be cured by irradiation with an active energy ray. In addition, the aqueous urethane resin has a polyoxyethylene group in the side chain, and can be self-emulsified.

The aqueous urethane resin composition of the present invention can be obtained as an emulsion or a dispersion by emulsifying or dispersing the above-mentioned aqueous urethane resin in water.
The method for emulsifying or dispersing the aqueous urethane resin in water is not particularly limited, and for example, while the aqueous urethane resin is stirred with a disperser such as a Homo Disper, water is gradually added to the aqueous urethane resin, for example, for 5 to 30 minutes. Thereafter, the mixture is aged by continuously stirring it for about one hour.

The water is mixed so that the solids concentration of the aqueous urethane resin in the aqueous urethane resin composition is, for example, 10 to 70% by weight, or preferably 20 to 60% by weight. A higher proportion of water than this range may be uneconomical while a lower proportion of water than this range may excessively increase viscosity, resulting in poor handling.
Thus, the aqueous urethane resin composition of the present invention with the aqueous urethane resin emulsified or dispersed in water can be obtained.

Further, in the aqueous urethane resin composition of the present invention, a photopolymerization compound, a photopolymerization initiator, capable of polymerizing by irradiation with an active energy ray can be mixed as an optional component according to the purpose and application.
Examples of the photopolymerization compound include hydroxyl group-containing acrylates having 1 to 3 hydroxyl groups such as 2-hydroxyethyl (meth)acrylate, 2-hydroxypropyl (meth)acrylate, 2-hydroxybutyl (meth)acrylate, 4-hydroxybutyl (meth)acrylate, 4-hydroxycyclohexyl (meth)acrylate, 3-chloro-2-hydroxypropyl (meth)acrylate, 2-hydroxy-3-phenyloxypropyl (meth)acrylate, 2-(meth)acryloyloxyethyl-2-hydroxyethyl phthalic acid, 2-hydroxyalkyl (meth)acryloyl phosphate, pentanediol mono(meth)acrylate, neopentyl glycol mono(meth)acrylate, polypropylene glycol mono(meth)acrylate, polyethylene glycol mono(meth)acrylate, trimethylolpropane mono(meth)acrylate, trimethylolpropane di(meth)acrylate, glycerol mono(meth)acrylate, glycerol di(meth)acrylate, pentaerythritol mono(meth)acrylate, pentaerythritol di(meth)acrylate, pentaerythritol tri(meth)acrylate, dipentaerythritol tetra(meth)acrylate, and dipentaerythritol penta(meth)acrylate; (meth)acrylic acids such as acrylic acid and methacrylic acid; aromatic vinyls/aromatic vinylidenes such as styrene, vinyltoluene, divinylbenzene, and α-methylstyrene; vinyl cyanides/vinylidene cyanides such as (meth)acrylonitrile; alkyl (meth)acrylates of 1 to 20 carbon atoms such as methyl (meth)acrylate, ethyl (meth)acrylate, propyl (meth)acrylate, butyl (meth)acrylate, t-butyl (meth)acrylate, 2-ethylhexyl (meth)acrylate, isononyl (meth)acrylate, lauroyl (meth)acrylate, and stearyl (meth)acrylate; cycloalkyl (meth)acrylates such as cyclohexyl (meth)acrylate; alkanediol di(meth)acrylates such as ethylene glycol di(meth)acrylate, propylene glycol di(meth)acrylate, butylene glycol di(meth)acrylate, pentanediol di(meth)acrylate, neopentyl glycol di(meth)acrylate, hexanediol di(meth)acrylate, nonanediol di(meth)acrylate, and oligoethylene glycol di(meth)acrylate; alkanepolyol poly(meth)acrylates such as trimethylolpropane tri(meth)acrylate, glycerol tri(meth)acrylate, pentaerythritol tetra(meth)acrylate, and dipentaerythritol hexa(meth)acrylate; unsaturated carboxylic acid allyl esters such as allyl (meth)acrylate, diallyl maleate, diallyl fumarate, and diallyl itaconate; glycidyl (meth)acrylates; urethane di(meth)acrylates; and polybutadiene di(meth)acrylates.

These photopolymerization compounds can be used alone or in combination of two or more kinds. Among them, ethylene glycol di(meth)acrylate, butylene glycol di(meth)acrylate, trimethylolpropane tri(meth)acrylate, pentaerythritol tetra(meth)acrylate, allyl (meth)acrylate, and dipentaerythritol hexa(meth)acrylate are preferable.

The photopolymerization compound is mixed in a proportion of, for example, 80 parts by weight or less, or preferably 60 parts by weight or less, per 100 parts by weight of the aqueous urethane resin composition.
Examples of the photopolymerization initiator include intermolecular hydrogen abstraction type photopolymerization initiators such as benzophenone-based photopolymerization initiators, thioxanthone-based photopolymerization initiators, benzil, Michler's ketone, and camphorquinone; and intramolecular bond cleavage type photopolymerization initiators such as acetophenone-based, benzoin ether-based, and acyl phosphine oxide-based photopolymerization initiators.

Examples of the benzophenone-based photopolymerization initiator include benzophenone, methyl o-benzoylbenzoate, 4-phenylbenzophenone, 4-benzoyl-4'-methyldiphenyl sulfide, 2,4,6-trimethyl benzophenone,(4-benzoylbenzil) trimethylammonium chloride, chlorobenzophenone, hydroxybenzophenone, methylbenzophenone, 3,3'-dimethyl-4-methoxybenzophenone, and acrylated benzophenone.

Examples of the thioxanthone-based photopolymerization initiator include 2- or 4-isopropylthioxanthone, 2,4-diethylthioxanthone, and 2,4-dichlorothioxanthone.
Examples of the acetophenone based photopolymerization initiator include diethoxyacetophenone, 2-hydroxy-2-methyl-1-phenylpropane-1-one (e.g., DAROCUR 1173, manufactured by Ciba Specialty Chemicals Inc.), benzildimethyl ketal (e.g., IRGACURE 651, manufactured by Ciba Specialty Chemicals Inc.; Lucirin BDK, manufactured by BASF), 1-hydroxy-cyclohexyl-phenyl ketone (e.g., IRGACURE 184, manufactured by Ciba Specialty Chemicals Inc.), 2-methyl-2-morpholino (4-thiomethyl phenyl) propane-1-one (e.g., IRGACURE 907, manufactured by Ciba Specialty Chemicals Inc.), 2-benzyl-2-dimethylamino-1 -(4-morpholinophenyl)-butanone (e.g., IRGACURE 369, manufactured by Ciba Specialty Chemicals Inc.), and oligomer of 2-hydroxy-2-methyl-1-[4-(1-methylvinyl)phenyl] propanone (e.g., Esacure KIP, manufactured by Lamberti s.p.a.).

Examples of the benzoin ether-based photopolymerization initiator include benzoin, benzoin methyl ether, benzoin ethyl ether, benzoin isopropyl ether, and benzoin isobutyl ether.
Examples of the acyl phosphine oxide-based photopolymerization initiator include 2,4,6-trimethyl benzoyldiphenyl phosphine oxide (for example, Lucirin TPO, manufactured by BASF), bis(2,6-dimethoxybenzoyl)-2,4,4-trimethylpentyl phosphine oxide (BAPO), bis(2,4,6-trimethylbenzoyl)phenyl phosphine oxide, bis(2,4,6-trimethylbenzoyl)ethyl phosphine oxide, and bis(2,4,6-trimethylbenzoyl)n-butyl phosphine oxide.

In addition to these, methylphenyl glyoxyester (Bycure 55, manufactured by AKZO Nobel), 3,6-bis(2-morpholinoisobutyl)-9-butylcarbazole (A-Cure 3, manufactured by Asahi Denka Kogyo), and titanocene compound can also be included.
These photopolymerization initiators can be used alone or in combination of two or more kinds. The photopolymerization initiator is mixed in a proportion of, for example, 10 parts by weight or less, or preferably 5 parts by weight or less, per 100 parts by weight of the aqueous urethane resin composition.

The photopolymerization initiator is not required in many cases when electron beam is used as the active energy ray, but required in many cases when ultraviolet ray is used as the active energy ray.
It is preferable that the photopolymerization initiator is added to the aqueous urethane resin composition before coating and completely dissolved therein.
In order to accelerate the photopolymerization reaction caused by the photopolymerization initiator, if necessary, a known sensitizer or photopolymerization accelerator can be mixed in the aqueous urethane resin composition together with the photopolymerization initiator.

Further, in the aqueous urethane resin composition of the present invention, if necessary, there can be appropriately added various additives such as antifoaming agent, leveling agent, pigment, dye, silicon compound, rosins, silane coupling agent, antioxidant, ultraviolet absorber, coloring agent, and brightening agent, according to the purpose and application.
The aqueous urethane resin composition thus obtained is prepared so as to have a solid content of, for example, 10 to 70% by weight, or preferably 20 to 60% by weight. Further, in the aqueous urethane resin composition, the aqueous polyurethane resin has a number average molecular weight in the range of, for example, 400 to 200000, or preferably 1000 to 100000, and contains, for example, 1 to 76% by weight, or preferably 1.5 to 56% by weight of a polyoxyethylene group.

The aqueous urethane resin composition of the present invention can keep the aqueous polyurethane resin in a stable state in water as an emulsion or a dispersion over a long period of time. Therefore, good long-term storage stability can be achieved.
When the aqueous urethane resin composition of the present invention is applied to an adherend (an object to be coated) and an active energy ray (e.g., electron beam, ultraviolet ray) is irradiated, the applied aqueous urethane resin composition is cured, so that a coating film capable of satisfactorily adhering to the adherend (the object to be coated) can be formed. Therefore, coating properties can be improved, and further, good water resistance can be obtained after curing.

Accordingly, the aqueous urethane resin composition of the present invention is useful for, for example, adhesive, primer, paint, coating material, or ink for various industrial materials such as plastic film, plastic sheet, plastic foam, fiber, synthetic leather, metal, and wood.

### EXAMPLES

While in the following, the present invention is described with reference to Synthesis Examples, Examples, and Comparative Examples, the present invention is not limited to any of them.

### Synthesis Example 1 (Synthesis of Dialkanolamine Derivative A)

A 4-neck flask equipped with a stirrer, a thermometer, a reflux tube and a nitrogen introducing tube was charged with 100 parts by weight of methoxypolyethylene glycol having a number average molecular weight of 1000 and 168 parts by weight of 1,6-hexamethylene diisocyanate, and the mixture was allowed to react at 70°C for 6 hours under a nitrogen atmosphere. The resulting reaction solution was subjected to thin-film distillation to remove unreacted 1,6-hexamethylene diisocyanate, so that a polyoxyethylene group-containing monoisocyanate was obtained.

Next, a 4-neck flask equipped with a stirrer, a thermometer, a reflux tube, and a nitrogen introducing tube was charged with 86 parts by weight of diethanolamine, and 950 parts by weight of the above-mentioned polyoxyethylene group-containing monoisocyanate was gradually added dropwise thereto with air-cooling under a nitrogen atmosphere so that the reaction temperature did not exceed 70°C. After completion of the dropwise addition, the mixture was stirred at 70°C for about one hour under a nitrogen atmosphere, and it was then confirmed that the isocyanate group disappeared, so that a dialkanolamine derivative A (polyoxyethylene group content: 76% by weight) was obtained.

### Synthesis Example 2 (Synthesis of Dialkanolamine Derivative B)

A 4-neck flask equipped with a stirrer, a thermometer, a reflux tube and a nitrogen introducing tube was charged with 200 parts by weight of methoxypolyethylene glycol having a number average molecular weight of 400 and 871 parts by weight of 1,6-hexamethylene diisocyanate, and the mixture was allowed to react at 70°C for 6 hours under a nitrogen atmosphere. The resulting reaction solution was subjected to thin-film distillation to remove unreacted 1,6-hexamethylene diisocyanate, so that a polyoxyethylene group-containing monoisocyanate was obtained.

Next, a 4-neck flask equipped with a stirrer, a thermometer, a reflux tube, and a nitrogen introducing tube was charged with 46 parts by weight of diethanolamine, and 250 parts by weight of the above-mentioned polyoxyethylene group-containing monoisocyanate was gradually added dropwise thereto with air-cooling under a nitrogen atmosphere so that the reaction temperature did not exceed 70°C. After completion of the dropwise addition, the mixture was stirred at 70°C for about one hour under a nitrogen atmosphere, and it was then confirmed that the isocyanate group disappeared, so that a dialkanolamine derivative B (polyoxyethylene group content: 55% by weight) was obtained.

### Example 1

### (Production of Aqueous Urethane Resin A)

To a 4-neck flask equipped with a stirrer, a thermometer, a reflux tube, and a nitrogen introducing tube were added 175 parts by weight of hydrogenated xylylene diisocyanate (trade name: TAKENATE 600, manufactured by Mitsui Chemicals Polyurethanes, Inc.) and 172 parts by weight of the dialkanolamine derivative A synthesized in Synthesis Example 1, and the mixture was heated to 80°C while dry nitrogen was blown thereinto. After a lapse of one hour, 0.12 parts by weight of stannous octoate was added thereto, and the mixture was stirred for additional 3 hours, so that an isocyanate group-terminated prepolymer was obtained.

Next, 0.36 parts by weight of p-methoxy phenol and 732 parts by weight of pentaerythritol triacrylate (LIGHT-ACRYLATE PE-3A, manufactured by Kyoeisha Chemical Co., Ltd.) were added thereto, and the mixture was heated to 70°C while dry air was blown thereinto. At the end of one hour, 0.24 parts by weight of stannous octoate was added thereto, and the mixture was stirred for additional 5 hours, so that an aqueous urethane resin A was obtained. At this point, IR analysis (NaCl plate method) confirmed the disappearance of the isocyanato group in the reaction liquid.

### (Production of Aqueous Urethane Resin Composition A)

In 70 parts by weight of the above-mentioned aqueous urethane resin A was mixed 30 parts by weight of pentaerythritol tetraacrylate (LIGHT-ACRYLATE PE-4A, manufactured by Kyoeisha Chemical Co., Ltd.).

Then, 229 parts by weight of the mixture was adjusted to 40°C, and 280 parts by weight of ion exchange water at 23°C was added thereto for 30 minutes using a homomixer with stirring at 2000 rpm. Subsequently, 0.25 parts by weight of a leveling agent (OLFINE E1004, manufactured by Toshin Chemical Industry Co., Ltd.) was added thereto, and the mixture was stirred at 1000 rpm for additional one hour, so that an aqueous urethane resin composition A having a solids concentration of 45% by weight was obtained.

### Example 2

### (Production of Aqueous Urethane Resin B)

To a 4-neck flask equipped with a stirrer, a thermometer, a reflux tube, and a nitrogen introducing tube were added 172 parts by weight of hexamethylene diisocyanate (trade name: TAKENATE 700, manufactured by Mitsui Chemicals Polyurethanes, Inc.) and 202 parts by weight of the dialkanolamine derivative A synthesized in Synthesis Example 1, and the mixture was heated to 80°C while dry nitrogen was blown thereinto. After a lapse of one hour, 0.12 parts by weight of stannous octoate was added thereto, and the mixture was stirred for additional 3 hours, so that an isocyanate group-terminated prepolymer was obtained.

Next, 0.36 parts by weight of p-methoxy phenol and 826 parts by weight of pentaerythritol triacrylate (LIGHT-ACRYLATE PE-3A, manufactured by Kyoeisha Chemical Co., Ltd.) were added thereto, and the mixture was heated to 70°C while dry air was blown thereinto. After a lapse of one hour, 0.24 parts by weight of stannous octoate was added thereto, and the mixture was stirred for additional 5 hours, so that an aqueous urethane resin B was obtained. At this point, IR analysis (NaCl plate method) confirmed the disappearance of the isocyanato group in the reaction liquid.

### (Production of Aqueous Urethane Resin Composition B)

Adjusted was 300 parts by weight of the above-mentioned aqueous urethane resin B to 40°C, and 300 parts by weight of ion exchange water at 23°C was added thereto for 30 minutes using a homomixer with stirring at 2000 rpm. Subsequently, 0.30 parts by weight of a leveling agent (OLFINE E1004, manufactured by Toshin Chemical Industry Co., Ltd.) was added thereto, and the mixture was stirred at 1000 rpm for additional one hour, so that an aqueous urethane resin composition B having a solids concentration of 50% by weight was obtained.

### Example 3

### (Production of Aqueous Urethane Resin Composition C)

In 90 parts by weight of the above-mentioned aqueous urethane resin A produced in Example 1 was mixed 10 parts by weight of dipentaerythritol hexaacrylate (KAYARAD DPHA, manufactured by Nippon Kayaku Co., Ltd.).
Then, 200 parts by weight of the mixture was adjusted to 40°C, and 200 parts by weight of ion exchange water at 23°C was added thereto for 30 minutes using a homomixer with stirring at 2000 rpm. Subsequently, 0.20 parts by weight of a leveling agent (OLFINE E1004, manufactured by Toshin Chemical Industry Co., Ltd.) was added thereto, and the mixture was stirred at 1000 rpm for additional one hour, so that an aqueous urethane resin composition C having a solids concentration of 50% by weight was obtained.

### Example 4

### (Production ofAqueous Urethane Resin D)

To a 4-neck flask equipped with a stirrer, a thermometer, a reflux tube, and a nitrogen introducing tube were added 208 parts by weight of hydrogenated xylylene diisocyanate (trade name: TAKENATE 600, manufactured by Mitsui Chemicals Polyurethanes, Inc.), 82 parts by weight of the dialkanolamine derivative A synthesized in Synthesis Example 1, and 133 parts by weight of the dialkanolamine derivative B synthesized in Synthesis Example 2, and the mixture was heated to 80°C while dry nitrogen was blown thereinto. After a lapse of one hour, 0.12 parts by weight of stannous octoate was added thereto, and the mixture was stirred for additional 3 hours, so that an isocyanate group-terminated prepolymer was obtained.

Next, 0.36 parts by weight of p-methoxy phenol and 778 parts by weight of pentaerythritol triacrylate (LIGHT-ACRYLATE PE-3A, manufactured by Kyoeisha Chemical Co., Ltd.) were added thereto, and the mixture was heated to 70°C while dry air was blown thereinto. After a lapse of one hour, 0.24 parts by weight of stannous octoate was added thereto, and the mixture was stirred for additional 5 hours, so that an aqueous urethane resin D was obtained. At this point, IR analysis (NaCl plate method) confirmed the disappearance of the isocyanato group in the reaction liquid.

### (Production of Aqueous Urethane Resin Composition D)

Adjusted was 200 parts by weight of the above-mentioned aqueous urethane resin D to 65°C, and 244 parts by weight of ion exchange water at 23°C was added thereto for 30 minutes using a homomixer with stirring at 2000 rpm. Subsequently, 0.22 parts by weight of a leveling agent (OLFINE E1004, manufactured by Toshin Chemical Industry Co., Ltd.) was added thereto, and the mixture was stirred at 1000 rpm for additional one hour, so that an aqueous urethane resin composition D having a solids concentration of 45% by weight was obtained.

### Example 5

### (Production of Aqueous Urethane Resin E)

To a 4-neck flask equipped with a stirrer, a thermometer, a reflux tube, and a nitrogen introducing tube were added 202 parts by weight of hydrogenated xylylene diisocyanate (trade name: TAKENATE 600, manufactured by Mitsui Chemicals Polyurethanes, Inc.), 132 parts by weight of the dialkanolamine derivative A synthesized in Synthesis Example 1, and 71 parts by weight of the dialkanolamine derivative B synthesized in Synthesis Example 2, and the mixture was heated to 80°C while dry nitrogen was blown thereinto. After a lapse of one hour, 0.12 parts by weight of stannous octoate was added thereto, and the mixture was stirred for additional 3 hours, so that an isocyanate group-terminated prepolymer was obtained.

Next, 0.36 parts by weight of p-methoxy phenol and 794 parts by weight of pentaerythritol triacrylate (LIGHT-ACRYLATE PE-3A, manufactured by Kyoeisha Chemical Co., Ltd.) were added thereto, and the mixture was heated to 70°C while dry air was blown thereinto. After a lapse of one hour, 0.24 parts by weight of stannous octoate was added thereto, and the mixture was stirred for additional 5 hours, so that an aqueous urethane resin E was obtained. At this point, IR analysis (NaCl plate method) confirmed the disappearance of the isocyanato group in the reaction liquid.

### (Production of Aqueous Urethane Resin Composition E)

Adjusted was 200 parts by weight of the above-mentioned aqueous urethane resin E to 65°C, and 244 parts by weight of ion exchange water at 23°C was added thereto for 30 minutes using a homomixer with stirring at 2000 rpm. Subsequently, 0.22 parts by weight of a leveling agent (OLFINE E1004, manufactured by Toshin Chemical Industry Co., Ltd.) was added thereto, and the mixture was stirred at 1000 rpm for additional one hour, so that an aqueous urethane resin composition E having a solids concentration of 45% by weight was obtained.

### Comparative Example 1

### (Production of Aqueous Urethane Resin F)

To a 4-neck flask equipped with a stirrer, a thermometer, a reflux tube, and a nitrogen introducing tube were added 188 parts by weight of hydrogenated xylylene diisocyanate (trade name: TAKENATE 600, manufactured by Mitsui Chemicals Polyurethanes, Inc.) and 169 parts by weight of methoxypolyethylene glycol (Methoxy PEG#1000, manufactured by TOHO Chemical Industry Co., Ltd.) having a number average molecular weight of 1000, and the mixture was heated to 80°C while dry nitrogen was blown thereinto.
After a lapse of one hour, 0.12 parts by weight of stannous octoate was added thereto, and the mixture was stirred for additional 3 hours, so that an isocyanate group-terminated prepolymer was obtained.

Next, 0.36 parts by weight of p-methoxy phenol and 843 parts by weight of pentaerythritol triacrylate (LIGHT-ACRYLATE PE-3A, manufactured by Kyoeisha Chemical Co., Ltd.) were added thereto, and the mixture was heated to 70°C while dry air was blown thereinto. After a lapse of one hour, 0.24 parts by weight of stannous octoate was added thereto, and the mixture was stirred for additional 5 hours, so that an aqueous urethane resin F was obtained. At this point, IR analysis (NaCl plate method) confirmed the disappearance of the isocyanato group in the reaction liquid.

### (Production of Aqueous Urethane Resin Composition F)

In 70 parts by weight of the above-mentioned aqueous urethane resin F was mixed 30 parts by weight of pentaerythritol tetraacrylate (LIGHT-ACRYLATE PE-4A, manufactured by Kyoeisha Chemical Co., Ltd.).

Then, 300 parts by weight of the mixture was adjusted to 40°C, and 367 parts by weight of ion exchange water at 23°C was added thereto for 30 minutes using a homomixer with stirring at 2000 rpm. Subsequently, 0.33 parts by weight of a leveling agent (OLFINE E1004, manufactured by Toshin Chemical Industry Co., Ltd.) was added thereto, and the mixture was stirred at 1000 rpm for additional one hour, so that an aqueous urethane resin composition F having a solids concentration of 45% by weight was obtained. It was confirmed that the aqueous urethane resin composition F was phase separated into a resin layer and an aqueous layer on the following day.

### Comparative Example 2

### (Production of Aqueous Urethane Resin G)

To a 4-neck flask equipped with a stirrer, a thermometer, a reflux tube, and a nitrogen introducing tube were added 363 parts by weight of hexamethylene diisocyanate trimer (trade name: CORONATE HX, manufactured by Nippon Polyurethane Industry Co., Ltd.) and 153 parts by weight of methoxypolyethylene glycol (Methoxy PEG#400, manufactured by TOHO Chemical Industry Co., Ltd.) having a number average molecular weight of 400, and the mixture was heated to 80°C while dry nitrogen was blown thereinto. After a lapse of one hour, 0.12 parts by weight of stannous octoate was added thereto, and the mixture was stirred for additional 3 hours, so that an isocyanate group-terminated prepolymer was obtained.

Next, 0.36 parts by weight of p-methoxy phenol and 684 parts by weight of pentaerythritol triacrylate (LIGHT-ACRYLATE PE-3A, manufactured by Kyoeisha Chemical Co., Ltd.) were added thereto, and the mixture was heated to 70°C while dry air was blown thereinto. After a lapse of one hour, 0.24 parts by weight of stannous octoate was added thereto, and the mixture was stirred for additional 3 hours, so that an aqueous urethane resin G was obtained. At this point, IR analysis (NaCl plate method) confirmed the disappearance of the isocyanato group in the reaction liquid.

### (Production of Aqueous Urethane Resin Composition G)

Then, 300 parts by weight of the above-mentioned aqueous urethane resin G was adjusted to 40°C, and 367 parts by weight of ion exchange water at 23°C was added thereto for 30 minutes using a homomixer with stirring at 2000 rpm.

Subsequently, 0.33 parts by weight of a leveling agent (OLFINE E1004, manufactured by Toshin Chemical Industry Co., Ltd.) was added thereto, and the mixture was stirred at 1000 rpm for additional one hour, so that an aqueous urethane resin composition G having a solids concentration of 45% by weight was obtained. It was confirmed that the aqueous urethane resin composition G was phase separated into a resin layer and an aqueous layer on the following day.

### Comparative Example 3

### (Production of Aqueous Urethane Resin H)

To a 4-neck flask equipped with a stirrer, a thermometer, a reflux tube, and a nitrogen introducing tube were added 263 parts by weight of hexamethylene diisocyanate trimer (trade name: CORONATE HX, manufactured by Nippon Polyurethane Industry Co., Ltd.) and 210 parts by weight of methoxypolyethylene glycol (Methoxy PEG#1000, manufactured by TOHO Chemical Industry Co., Ltd.) having a number average molecular weight of 1000, and the mixture was heated to 80°C while dry nitrogen was blown thereinto.
After a lapse of one hour, 0.10 parts by weight of stannous octoate was added thereto, and the mixture was stirred for additional 3 hours, so that an isocyanate group-terminated prepolymer was obtained.

Next, 0.30 parts by weight of p-methoxy phenol and 527 parts by weight of pentaerythritol triacrylate (LIGHT-ACRYLATE PE-3A, manufactured by Kyoeisha Chemical Co., Ltd.) were added thereto, and the mixture was heated to 70°C while dry air was blown thereinto. After a lapse of one hour, 0.10 parts by weight of stannous octoate was added thereto, and the mixture was stirred for additional 3 hours, so that an aqueous urethane resin H was obtained. At this point, IR analysis (NaCl plate method) confirmed the disappearance of the isocyanato group in the reaction liquid.

### (Production of Aqueous Urethane Resin Composition H)

Adjusted was 200 parts by weight of the above-mentioned aqueous urethane resin H to 40°C, and 300 parts by weight of ion exchange water at 23°C was added thereto for 30 minutes using a homomixer with stirring at 2000 rpm. Subsequently, 0.25 parts by weight of a leveling agent (OLFINE E1004, manufactured by Toshin Chemical Industry Co., Ltd.) was added thereto, and the mixture was stirred at 1000 rpm for additional one hour, so that an aqueous urethane resin composition H having a solids concentration of 40% by weight was obtained.

### Comparative Example 4

### (Production of Aqueous Urethane Resin I)

To a 4-neck flask equipped with a stirrer, a thermometer, a reflux tube, and a nitrogen introducing tube were added 273 parts by weight of hexamethylene diisocyanate trimer (trade name: CORONATE HX, manufactured by Nippon Polyurethane Industry Co., Ltd.), 171 parts by weight of methoxypolyethylene glycol (Methoxy PEG#1000, manufactured by TOHO Chemical Industry Co., Ltd.) having a number average molecular weight of 1000, and 68 parts by weight of methoxypolyethylene glycol (Methoxy PEG#400, manufactured by TOHO Chemical Industry Co., Ltd.) having a number average molecular weight of 400, and the mixture was heated to 80°C while dry nitrogen was blown thereinto. After a lapse of one hour, 0.10 parts by weight of stannous octoate was added thereto, and the mixture was stirred for additional 3 hours, so that an isocyanate group-terminated prepolymer was obtained.

Next, 0.30 parts by weight of p-methoxy phenol and 488 parts by weight of pentaerythritol triacrylate (LIGHT-ACRYLATE PE-3A, manufactured by Kyoeisha Chemical Co., Ltd.) were added thereto, and the mixture was heated to 70°C while dry air was blown thereinto. After a lapse of one hour, 0.10 parts by weight of stannous octoate was added thereto, and the mixture was stirred for additional 3 hours, so that an aqueous urethane resin I was obtained. At this point, IR analysis (NaCl plate method) confirmed the disappearance of the isocyanato group in the reaction liquid.

### (Production of Aqueous Urethane Resin Composition I)

Adjusted was 200 parts by weight of the above-mentioned aqueous urethane resin I to 40°C, and 300 parts by weight of ion exchange water at 23°C was added thereto for 30 minutes using a homomixer with stirring at 2000 rpm. Subsequently, 0.25 parts by weight of a leveling agent (OLFINE E1004, manufactured by Toshin Chemical Industry Co., Ltd.) was added thereto, and the mixture was stirred at 1000 rpm for additional one hour, so that an aqueous urethane resin composition I having a solids concentration of 40% by weight was obtained.

### Comparative Example 5

### (Production of Aqueous Urethane Resin J)

To a 4-neck flask equipped with a stirrer, a thermometer, a reflux tube, and a nitrogen introducing tube were added 348 parts by weight of hexamethylene diisocyanate trimer (trade name: CORONATE HX, manufactured by Nippon Polyurethane Industry Co., Ltd.) and 172 parts by weight of methoxypolyethylene glycol (Uniox M-550, manufactured by NOF Corporation) having a number average molecular weight of 550, and the mixture was heated to 80°C while dry nitrogen was blown thereinto. After a lapse of one hour, 0.10 parts by weight of stannous octoate was added thereto, and the mixture was stirred for additional 3 hours, so that an isocyanate group-terminated prepolymer was obtained.

Next, 0.36 parts by weight of p-methoxy phenol and 680 parts by weight of pentaerythritol triacrylate (LIGHT-ACRYLATE PE-3A, manufactured by Kyoeisha Chemical Co., Ltd.) were added thereto, and the mixture was heated to 70°C while dry air was blown thereinto. After a lapse of one hour, 0.10 parts by weight of stannous octoate was added thereto, and the mixture was stirred for additional 3 hours, so that an aqueous urethane resin J was obtained. At this point, IR analysis (NaCl plate method) confirmed the disappearance of the isocyanato group in the reaction liquid.

### (Production of Aqueous Urethane Resin Composition J)

Adjusted was 300 parts by weight of the above-mentioned aqueous urethane resin J to 25°C, and 367 parts by weight of ion exchange water at 23°C was added thereto for 30 minutes using a homomixer with stirring at 2000 rpm. Subsequently, 0.33 parts by weight of a leveling agent (OLFINE E1004, manufactured by Toshin Chemical Industry Co., Ltd.) was added thereto, and the mixture was stirred at 1000 rpm for additional one hour, so that an aqueous urethane resin composition J having a solids concentration of 45% by weight was obtained.

### Evaluation

The aqueous urethane resin compositions obtained in each of Examples and Comparative Examples were evaluated in the following manner. The results are shown in Tables 1 and 2.

### 1) Production of Sample

An photopolymerization initiator (trade name: DAROCUR 1173, manufactured by Ciba Specialty Chemicals Inc.) was added to 100 parts by weight of the aqueous urethane resin composition obtained in each of Examples and Comparative Examples in the proportion shown in Table 1. Then, the aqueous urethane resin composition was applied onto a test plate with an applicator so as to have a film thickness of 100 µm.

Subsequently, the applied aqueous urethane resin composition was dried at 75°C for 10 minutes, and then cured by irradiation with ultraviolet rays (500mJ/cm²) using a high-pressure mercury-vapor lamp (80 W/cm, 2 lamps), so that a coating film (sample) was obtained.

### 2) Adhesion

Using a polycarbonate plate and an ABS plate as test plates, cross-cut lines at an interval of 1 mm were formed in a 10 x 10 lattice pattern on the coating film produced on each of their upper surfaces in accordance with JIS K 5400. A piece of cellophane tape was once adhered to the coated surface and then peeled off. The presence or absence of peeling of the coating film was then evaluated.

### 3) Hardness

Using a polycarbonate plate and an ABS plate as test plates, the pencil hardness of the coating films formed on their upper surfaces was measured in accordance with JIS K5400.

### 4) Warm Water Immersion Test

Using a polycarbonate plate and an ABS plate as test plates, the ABS plate and the polycarbonate plate each having a coating film thereon were immersed in warm water at 60°C for 4 hours. Thereafter, the plates were drawn up and water drops thereon were wiped off. Then, a visual inspection and the same peeling test as in process 2) were carried out within 1 to 2 hours of being drawn up.

### 5) Solvent Resistance

An ABS plate was used as a test plate. About 0.5 ml of methyl ethyl ketone was dropped on the ABS plate with a Komagome pipette, and covered to prevent volatilization, and allowed to stand at room temperature for 24 hours. Thereafter, a visual inspection and the same peeling test as in 2) above were carried out.

In the item of "Appearance" in Table 1, A indicates no change in appearance, and B indicates change in appearance. The "change in appearance" state is a blister occurring state.
In the item of "Adhesion" in Table 1, A indicates absence of peeling and B indicates presence of peeling. In Comparative Examples 3 and 4, initial adhesion was poor, so that when adhesion test was not conducted, the reason for this is described in the table.

### 6) Storage Stability

The aqueous urethane resin composition obtained in each of Examples 1 to 5 and Comparative Example 5 was kept in a thermostatic oven at 40°C, for 1, 2, and 4 weeks, respectively, to evaluate storage stability.

In Table 2, A indicates no phase separation, and B indicates phase separation.

[Table 1]

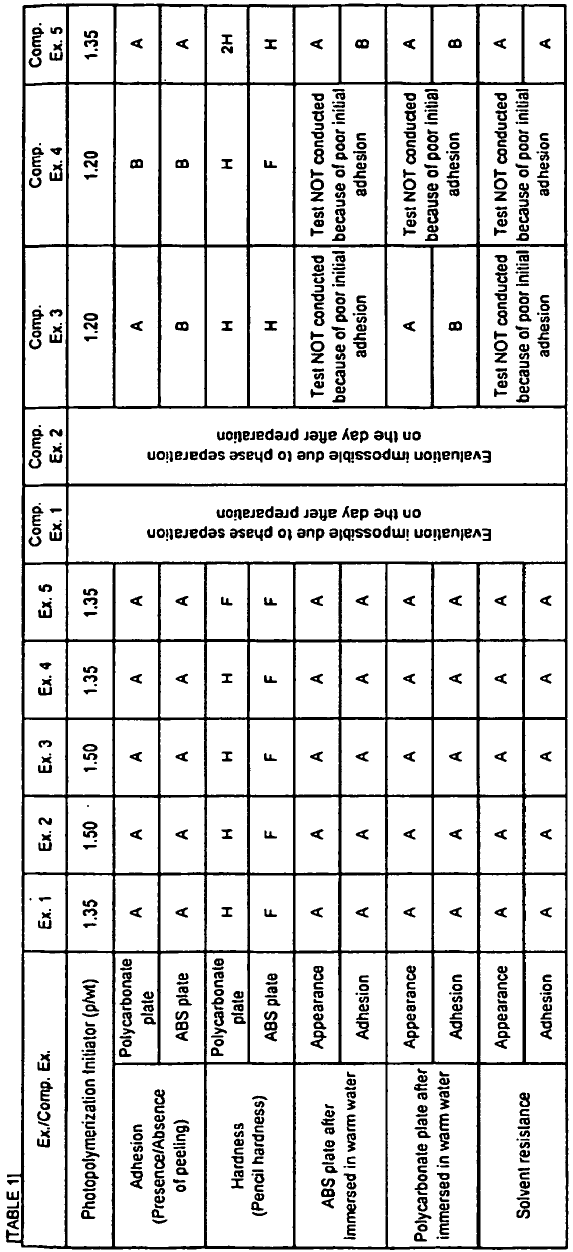

[Table 2]

**[TABLE 2]**

| Ex./Comp. Ex. | | EX. 1 | EX. 2 | EX. 3 | EX. 4 | EX. 5 | Comp. Ex. 5 |
|---|---|---|---|---|---|---|---|
| Photopolymerization Initiator (p/wt) | | 1.35 | 1.50 | 1.50 | 1.35 | 1.35 | 1.35 |
| Storage stability | 1 week later | A | A | A | A | A | A |
| | 2 weeks later | A | A | A | A | A | A |
| | 4 weeks later | A | A | A | A | A | B |

While the illustrative embodiments of the present invention are provided in the above description, such is for illustrative purpose only and it is not to be cobstrued restrictively. Modification and variation of the present invention that will be obvious to those skilled in the art is to be covered by the following claims.

### INDUSTRIAL APPLICABILITY

The aqueous urethane resin composition of the present invention can be utilized as , for example, adhesive, primer, paint, coating material, or ink for various industrial materials such as plastic film, plastic sheet, plastic foam, fiber, synthetic leather, metal, and wood.

## Claims

1. An aqueous urethane resin composition comprising:
an aqueous urethane resin obtained by reacting only a polyisocyanate,
a polyoxyethylene side chain-containing diol containing 20 to 95% by weight of a polyoxyethylene group relative to the polyoxyethylene side chain-containing diol in a mid portion of a side chain branched from a main chain having a hydroxyl group at both ends, and
a (meth)acrylic acid ester containing at least one hydroxyl group,
and cured by irradiation with an active energy ray;
and water.

2. The aqueous urethane resin composition according to claim 1, wherein the polyoxyethylene side chain-containing diol is a dialkanolamine derivative represented by the following general formula (1): 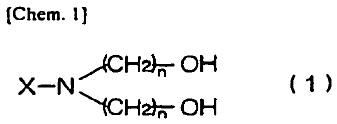 wherein n may be the same or different from each other and each represents an integer of 1 to 3; and
X represents a monovalent organic group containing 26 to 97% by weight of an oxyethylene group.

3. The aqueous urethane resin composition according to claim 2, wherein, in the general formula (1), X is a monovalent organic group represented by the following general formula (2):
Z-CO-NH-Y-NH-CO- (2) [Chem. 2]
wherein Z represents a lower alkyloxy-polyoxyethylene group having an average molecular weight of 120 to 5000; and Y represents a divalent hydrocarbon group of 6 to 15 carbon atoms.

4. The aqueous urethane resin composition according to claim 1, wherein the aqueous urethane resin is obtained by reacting only 10 to 80 parts by weight of the polyisocyanate, 5 to 80 parts by weight of the polyoxyethylene side chain-containing diol, and 10 to 80 parts by weight of the (meth)acrylic acid ester.

5. The aqueous urethane resin composition according to claim 1, wherein the polyisocyanate comprises 1,3- or 1,4-bis(isocyanatomethyl)cyclohexane or a mixture thereof.

6. The aqueous urethane resin composition according to claim 1, wherein the aqueous urethane resin composition is prepared by preparing an isocyanate group-terminated prepolymer by reacting the polyisocyanate and the polyoxyethylene side chain-containing diol, and subsequently reacting the isocyanate group-terminated prepolymer with the (meth)acrylic acid ester.

## Patentansprüche

1. Wässrige Urethanzusammensetzung, umfassend:
ein wässriges Urethanharz, das erhalten wurde durch Umsetzen von nur
einem Polyisocyanat,
einem eine Polyoxyethylen-Seitenkette enthaltendes Diol, das 20 bis 95 Gew.% Polyoxyethylengruppen in bezug auf das die Polyoxyethylen-Seitenkette enthaltende Diol in einem mittleren Bereich einer Seitenkette, die von einer Hauptkette mit einer Hydroxylgruppe an beiden Enden abgezweigt ist, enthält, und
einem (Meth)acrylsäureester, der mindestens eine Hydroxylgruppe enthält,
und Härten durch Bestrahlung mit aktiver Energiestrahlung;
und Wasser.

2. Wässrige Urethanharzzusammensetzung gemäss Anspruch 1, wobei das die Polyoxyethylen-Seitenkette enthaltende Diol ein Dialkanolaminderivat der nachstehenden allgemeinen Formel (1) ist: 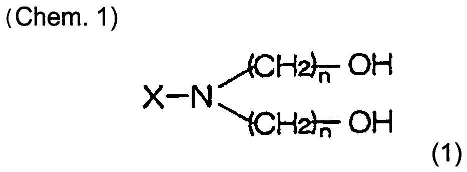 worin n jeweils gleich oder voneinander verschieden sein kann und jeweils eine ganze Zahl von 1 bis 3 darstellt; und
X eine monovalente organische Gruppe mit 26 bis 97 Gew.% einer Oxyethylengruppe darstellt.

3. Wässrige Urethanharzzusammensetzung gemäss Anspruch 2, wobei in der allgemeinen Formel (1) X eine monovalente organische Gruppe der nachstehenden allgemeinen Formel (2) ist:
(Chem.2) Z-CO-NH-Y-NH-CO- (2)
worin Z eine Niederalkyloxy-polyoxyethylen-Gruppe mit einem mittleren Molekulargewicht von 120 bis 5.000 darstellt; und Y eine divalente Kohlenwasserstoffgruppe mit 6 bis 15 Kohlenstoffatomen darstellt.

4. Wässrige Urethanharzzusammensetzung gemäss Anspruch 1, wobei das wässrige Urethanharz durch Umsetzen von nur 10 bis 80 Gew.-Teilen des Polyisocyanats, 5 bis 80 Gew.-Teilen des eine Polyoxyethylen-Seitenkette enthaltenden Diols und 10 bis 80 Gew.-Teilen des (Meth)acrylsäureesters erhalten wird.

5. Wässrige Urethanharzzusammensetzung gemäss Anspruch 1, wobei das Polyisocyanat 1,3- oder 1,4-Bis-(isocyanatmethyl)cyclohexan oder eine Mischung davon umfasst.

6. Wässrige Urethanharzzusammensetzung gemäss Anspruch 1, wobei die wässrige Urethanharzzusammensetzung durch Herstellen eines mit Isocyanatgruppen endenden Präpolymers durch Umsetzen des Polyisocyanats und des eine Polyoxyethylen-Seitenkette enthaltenden Diols und anschliessendes Umsetzen des mit Isocyanatgruppen endenden Präpolymers mit einem (Meth)acrylsäureester hergestellt wird.

## Revendications

1. Composition de résine aqueuse d'uréthane comprenant :
une résine aqueuse d'uréthane obtenue par réaction uniquement
d'un polyisocyanate,
d'un diol contenant une chaîne latérale polyoxyéthylène contenant 20 à 95% en poids d'un groupe polyoxyéthylène par rapport au diol contenant une chaîne latérale polyoxyéthylène dans une partie médiane d'une chaîne latérale ramifiée à partir d'une chaîne principale ayant un groupe hydroxyle aux deux extrémités, et
un ester d'acide (méth)acrylique contenant au moins un groupe hydroxyle,
et durci par irradiation avec un rayon énergétique actif ;
et de l'eau.

2. Composition de résine aqueuse d'uréthane selon la revendication 1, dans laquelle le diol contenant une chaîne latérale polyoxyéthylène est un dérivé de dialcanolamine représenté par la formule générale (1) suivante : 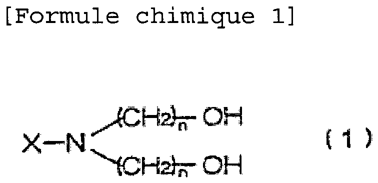 dans laquelle les n peuvent être identiques ou différents l'un de l'autre et chacun représente un entier de 1 à 3 ; et
X représente un groupe organique monovalent contenant 26 à 97% en poids d'un groupe oxyéthylène.

3. Composition de résine aqueuse d'uréthane selon la revendication 2, dans laquelle, dans la formule générale (1), X est un groupe organique monovalent représenté par la formule générale (2) suivante :
Z-CO-NH-Y-NH-CO- (2) [Formule chimique 2]
dans laquelle Z représente un groupe alkyloxy-polyoxyéthylène inférieur ayant un poids moléculaire moyen de 120 à 5 000 ; et Y représente un groupe hydrocarbure divalent de 6 à 15 atomes de carbone.

4. Composition de résine aqueuse d'uréthane selon la revendication 1, dans laquelle la résine aqueuse d'uréthane est obtenue par réaction uniquement de 10 à 80 parties en poids du polyisocyanate, de 5 à 80 parties en poids du diol contenant une chaîne latérale polyoxyéthylène, et de 10 à 80 parties en poids de l'ester d'acide (méth)acrylique.

5. Composition de résine aqueuse d'uréthane selon la revendication 1, dans laquelle le polyisocyanate comprend du 1,3- ou du 1,4-bis(isocyanatométhyl)cyclohexane ou un mélange de ceux-ci.

6. Composition de résine aqueuse d'uréthane selon la revendication 1, dans laquelle la composition de résine aqueuse d'uréthane est préparée en préparant un prépolymère terminé par un groupe isocyanate en faisant réagir le polyisocyanate et le diol contenant une chaîne latérale polyoxyéthylène, et ensuite en faisant réagir le prépolymère terminé par un groupe isocyanate avec l'ester d'acide (méth)acrylique.
